# EUROPÄISCHE PATENTSCHRIFT

(11) **EP 0 407 749 B1**
(45) Veröffentlichungstag und Bekanntmachung des Hinweises auf die Patenterteilung: **20.10.1993**
(21) Anmeldenummer: 90111249.0
(22) Anmeldetag: 14.06.1990
(51) Int. Cl.: F16D 67/06, F16D 35/00

(54) **Flüssigkeitsreibungskupplung**
Liquid friction coupling
Accouplement à friction de liquide

(30) Priorität: 08.07.1989 DE 8908359 U
(43) Veröffentlichungstag der Anmeldung: 16.01.1991
(73) Patentinhaber: Behr GmbH & Co., D-70469 Stuttgart (DE)
(72) Erfinder: Martin, Hans, Dipl.-Ing., D-7000 Stuttgart 1 (DE); Kappeler, Achim, Dipl.-Ing.(FH), D-7107 Neckarsulm (DE)
(74) Vertreter: Wilhelm & Dauster Patentanwälte European Patent Attorneys

(56) Entgegenhaltungen:
- US-A- 4 556 138
- US-A- 4 569 426

## Beschreibung

Die Erfindung betrifft eine Flüssigkeitsreibungskupplung, insbesondere für den Antrieb des Lüfters eines Kühlers für eine Verbrennungskraftmaschine, bestehend aus einer Vorratskammer und einer Arbeitskammer sowie einem angetriebenen und einem von diesem in Abhängigkeit von der Füllung der Arbeitskammer mitgenommenen und mit einer Bremseinrichtung versehenen Kupplungsteil.

Flüssigkeitsreibungskupplungen dieser Art sind bekannt (DE-A- 34 20 277). Bei diesen Bauarten ist vorgesehen, daß eine insbesondere durch ein aus einer Memorylegierung bestehendes, temperaturempfindliches Element betätigte Bremse eine Drehung des Ventilatorflügelrades verhindert, wenn die Kühllufttemperatur unterhalb eines vorgegebenen Wertes liegt. Die Kühllufttemperatur, die von einem auf dem Kupplungsgehäuse angebrachten Bimetall hinter dem Kühler gemessen wird, dient dabei als Maß für die Kühlmitteltemperatur des Motors. Abhängig davon wird auch der Füllungsgrad in der Arbeitskammer der Flüssigkeitsreibungskupplung geregelt.

Die dort vorgesehene Bremse dient als statische Feststellbremse im Anfahrzustand des Motors; sie ist nicht für eine kurzfristige Betätigung etwa während des Betriebes ausgelegt.

Der Erfindung liegt die Aufgabe zugrunde, eine Flüssigkeitsreibungskupplung der eingangs gennanten Art so auszubilden, daß die Kupplung jederzeit und in Abhängigkeit von beliebigen Parametern abgebremst werden kann, so daß die Betriebsweise, bei der die Kupplung mit entleerter Arbeitskammer in einer Leerlaufdrehzahl mitläuft, auch bei Betriebszuständen unterbunden werden kann, bei denen zweckmäßigerweise keinerlei Ausgangs drehzahl gewünscht wird.

Diese Aufgabe wird dadurch gelöst, daß die Bremseinrichtung als eine von einem Elektromagneten jederzeit beliebig betätigbare Bremse ausgebildet ist, die am mitgenommenen Kupplungsteil so angreift daß Zu- und Ablauf von Kupplungsflüssigkeit zwischen der Vorratskammer und der Arbeitskammer durch die Drehzahldifferenz zwischen dem angetriebenen und dem mitgenommenen, abbremsbaren Kupplungsteil steuerbar sind. Bei dieser Ausgestaltung kann jederzeit und kurzfristig und ohne Berücksichtigung von Trägheitseinflüssen der Abtrieb abgebremst oder stillgesetzt werden. Eine wesentlich vorteilhaftere Arbeitsweise der Kupplung kann erreicht werden. Besonders vorteilhaft ist auch, daß eine solche Kupplung nur über den Elektromagneten gesteuert werden kann und keine Bimetallsteuerung mit einem Ventilhebel zur Regelung des Zuflusses von Kupplungsflüssigkeit zur Arbeitskammer aufweisen muß. Bei der neuen Kupplung wird der Zu- und Ablauf der Kupplungsflüssigkeit von der Vorratskammer in die Arbeitskammer über die Differenzdrehzahl zwischen dem angetriebenen und dem - abbremsbaren - mitgenommenen Kupplungsteil erreicht.

Nach den Merkmalen der Unteransprüche kann die neue Flüssigkeitsreibungskupplung noch verbessert werden. Nach den Ansprüchen 2 bis 4 ist es besonders vorteilhaft, den Elektromagneten in einer ortsfest angeordneten Halterung unterzubringen, die in einfacher Weise als ein tiefgezogenes Gehäuse aus Blech in der Form eines Tragringes ausgebildet sein kann. Diese Ausgestaltung bringt eine entscheidende Vereinfachung bei der Herstellung und eine gegenüber bekannten Bauarten entscheidende Gewichtsreduzierung für die Ausbildung einer Magnetspule. Es sind auch keine Niet- und Schweißverbindungen oder aufwendige Werkzeuge und Vorrichtungen zur Herstellung der Elektromagnetspule notwendig. Das komplette Spulengehäuse kann insgesamt ohne eine Niet- und Schweißverbindung aus einem Stück Stahlblech tiefgezogen werden. Durch diese Ausgestaltung wird es auch möglich, eine kurze Baulänge bei einem großen freien Innendurchmesser zu erhalten.

Nach den Merkmalen der Ansprüche 5 und 6 ist es vorteilhaft, zur ortsfesten Anordnung vorgesehene Festhaltearme einstückig an dem tiefgezogenen Tragring anzuordnen, so daß auch zur Befestigung des Tragringes keine zusätzlichen Bauteile mehr notwendig sind. Vorteilhaft ist es auch, die geschlossene Rückseite des den Tragring für den Elektromagneten bildenden Gehäuses als Reibfläche auszubilden und unmittelbar an einer axial beweglichen und am mitgenommenen Kupplungsteil angebrachten Bremsscheibe anliegen zu lassen. Durch diese Bauweise wird das Bremsmoment unmittelbar von den Befestigungsarmen aufgenommen. Eine Abdeckung des im Querschnitt etwa U-förmig ausgebildeten Traggehäuses nach hinten bleibt bei dieser Ausgestaltung kräfte- und momentfrei. Eine Befestigung einer solchen Abdeckung, etwa durch Schweißen, wird daher überflüssig.

Nach den Ansprüchen 7 und 8 ist es vorteilhaft, die Bremsscheibe, die am mitgenommenen Kupplungsteil angebracht ist, mit über ihren Umfang nach außen vorstehenden, federnden Armen mit dem Kupplungsgehäuse zu verbinden, wobei die federnden Arme etwa tangential zu einem Durchmesser verlaufen können, der etwa in der Mitte der Bremsscheibe liegt. Die Arme werden mit einem Ende an der Bremsscheibe angebracht und mit dem anderen am Kupplungsgehäuse. Diese Ausgestaltung ermöglicht eine leichte Axialbewegung der Bremsscheibe und eine ausgezeichnete Übertragung von Bremsmomenten in Umfangsrichtung.

In der Zeichnung ist ein Ausführungsbeispiel der Neuerung dargestellt, das im folgenden beschrieben wird. Es zeigen:
- Fig. 1: einen schematischen Längsschnitt durch eine erfindungsgemäß ausgestaltete Kupplung,

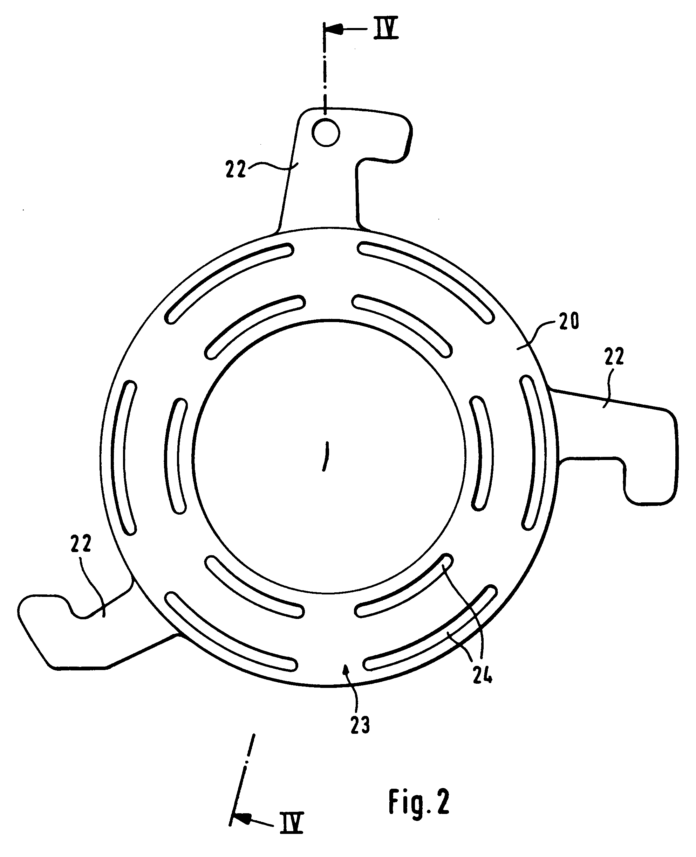

- Fig. 2: die Ansicht des bei der Ausführungsform der Fig. 1 vorgesehenen Spulengehäuse in Richtung des Pfeiles II gesehen, wobei alle anderen Bauteile weggelassen sind,
- Fig. 3: die Ansicht der Bremsscheibe der Bauart der Fig. 1 in Richtung des Pfeiles III der Fig. 1 gesehen, wobei ebenfalls alle anderen Bauteile weggelassen worden sind, und
- Fig. 4: die Schnittdarstellung durch das Spulengehäuse der Fig. 2 bzw. durch die Bremsscheibe der Fig. 3 jeweils längs der Schnittlinie IV-IV und in der auch in Fig. 1 gezeigten Einbaulage.

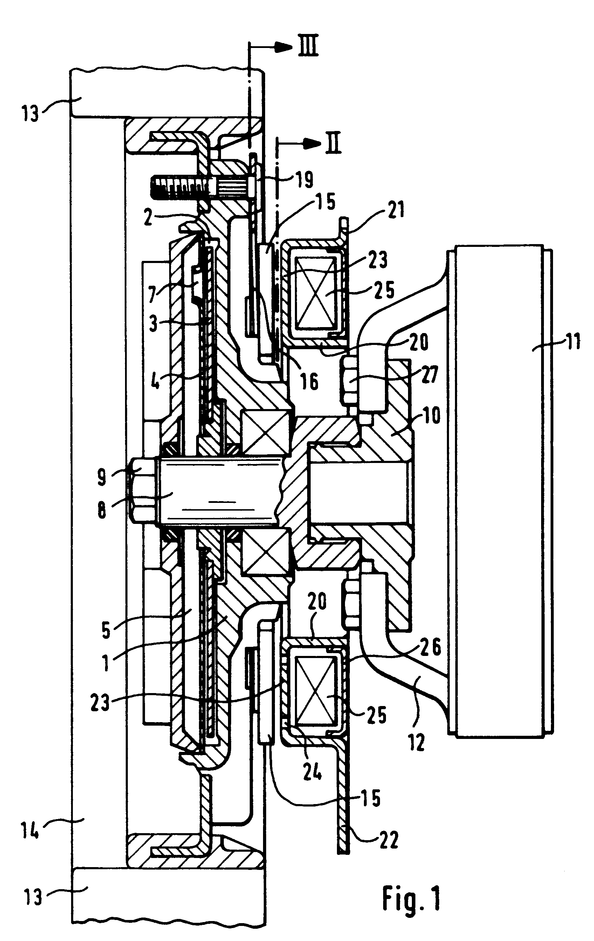

In der Fig. 1 ist eine Flüssigkeitsreibungskupplung gezeigt, die aus einem Kupplungsgehäuse (1) mit einer darin gebildeten Arbeitskammer (2) und aus einer darin umlaufenden, angetriebenen Kupplungsscheibe (3) besteht. Die Arbeitskammer (2) wird dabei durch eine Trennwand (4) von einem Vorratsraum (5) abgeschlossen, der innerhalb eines auf das Kupplungsgehäuse (1) vorne aufgesetzten Deckels (6) liegt. In der Trennwand (4) ist eine Öffnung (7) vorgesehen, durch die die Kupplungsflüssigkeit vom Vorratsraum (5) in die Arbeitskammer (2) gefördert werden kann. Sie wird von dort aus in nicht näher gezeigter, weil bekannter Weise über am äußeren Umfang angeordnete Pumpelemente wieder in den Vorratsraum zurückgefördert. Der Zu- und Rücklauf wird dabei ausschließlich über die Differenzdrehzahl zwischen der Kupplungsscheibe (3) und dem Kupplungsgehäuse (1) bewirkt, wie später noch erläutert wird.

Die Kupplungsscheibe (3) ist drehfest auf einer zentralen Nabe (8) angeordnet,die über einen ebenfalls zentralen Schraubbolzen (9) mit einem Antriebsflansch (10) verschraubt wird, der mit einer angetriebenen Riemenscheibe (11) verbunden sein kann. Außen am Kupplungsgehäuse (1) ist ein Ventilator (14) mit Ventilatorflügeln (13) befestigt, die temperaturabhängig von der Flüssigkeitsreibungskupplung angetrieben werden können.

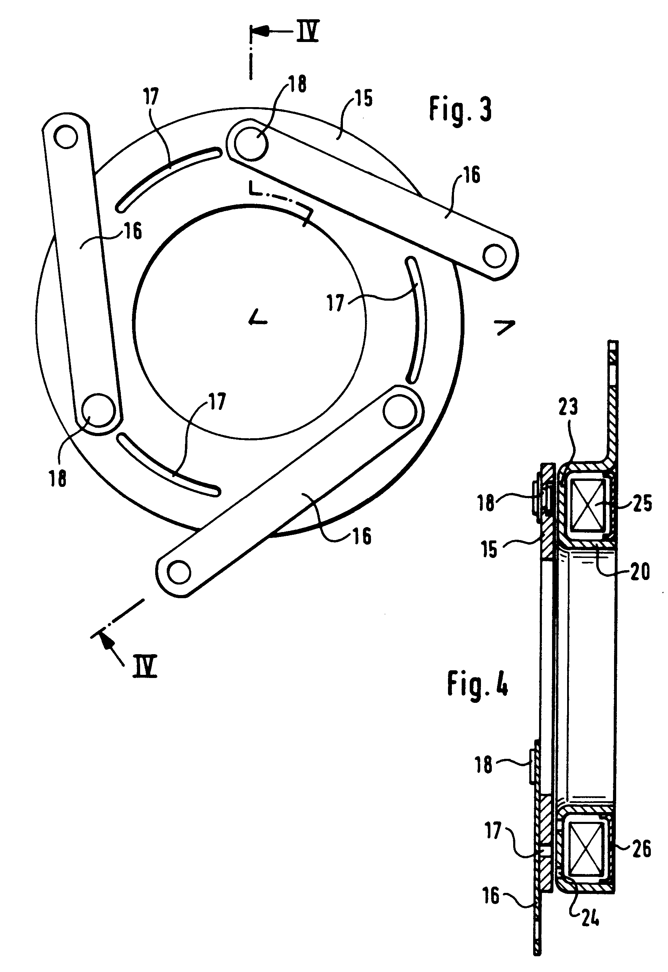

Auf der vom Deckel (6) abgewandten Rückseite des Kupplungsgehäuses (1) ist eine Bremsscheibe (15) mit Hilfe von federnden Armen (16) angebracht, die im einzelnen in den Fig. 3 und 4 noch einmal gezeigt ist. Die Bremsscheibe (15) ist ringförmig ausgebildet und mit gleichmäßig auf ihrem Umfang etwa in der Mitte der Breite des Ringes angeordneten Schlitzen (17) versehen, die in bekannter Weise dazu dienen, das Magnetfeld zu verstärken.

Wie aus Fig. 3 erkennbar ist, sind mit der Bremsscheibe (15) drei federnde Arme (16) verbunden, die jeweils tangential zu einem Durchmesser verlaufen, der etwa in der Mitte der Breite der Bremsscheibe (15) verläuft und die mit einem Ende über Befestigungsnieten (18) o.dgl. an der Bremsscheibe (15) angelenkt und mit dem anderen Ende jeweils mit Schraubbolzen (19) am Kupplungsgehäuse (1) verschraubt sind, die beim Ausführungsbeispiel auch zur Befestigung des Ventilatorringes (14) dienen.

Gegenüber der Bremsscheibe (15) ist ein ringförmiges Spulengehäuse (20) vorgesehen, das in einfacher Weise aus einem Stahlblech in Ringform tiefgezogen ist, wobei an dem nach außen abstehenden, umlaufenden Rand (21) drei am Umfang gleichmäßig verteilte Befestigungsarme (22) angeformt sind, die in nicht näher dargestellter Weise zur ortsfesten Befestigung des Spulengehäuses (20) an einer nicht dargestellten Halterung dienen. Das als Tragring ausgebildete Spulengehäuse (20) besitzt ein U-förmiges Profil, wobei die geschlossene Seite des Profiles, d.h. die Rückseite (23), eine mit der Bremsscheibe (15) zusammenwirkende Reibfläche bildet, die ebenfalls mit etwa gleichmäßig auf dem Umfang verteilten Schlitzen (24) versehen ist. In den U-förmigen Ringkanal des Spulengehäuses (20) ist eine Elektromagnetspule (25) eingesetzt, die beispielsweise in einem Isoliermaterial vergossen werden kann. Die offene Seite des Spulengehäuses (20) kann dann durch eine ringförmige Abdeckung (26) verschlossen werden, die lediglich eingesetzt oder eingeklebt zu werden braucht, da alle beim Bremsvorgang auftretenden Kräfte und Momente von den Befestigungsarmen (22) unmittelbar aufgenommen werden, so daß die Abdeckung (26) nur die Abdeckfunktion und die Leitung des Magnetfeldes übernehmen muß.

Bei der neuen Kupplung kann durch Strombeaufschlagung des Elektromagneten (25) die Bremsscheibe (15) axial gegen die Rückseite (23) des Spulengehäuses (20) gezogen werden, so daß das Kupplungsgehäuse (1) und damit der Ventilatorring abgebremst wird. Dies kann nicht nur in der Anlaufphase, d.h. bei geringen Motortemperaturen, sondern auch abhängig von anderen Parametern während des Betriebes vorgenommen werden.Die neue Flüssigkeitsreibungskupplung besitzt daher eine dynamische Elektromagnetbremse. Diese Elektromagnetbremse übernimmt auch die Steuerung des Zu- und Abflusses der Kupplungsflüssigkeit in die Arbeitskammer. Wird nämlich beim Anlassen des Motors die Bremse eingelegt, so wird bei maximaler Relativdrehzahl die Kupplungsflüssigkeit aus der Arbeitskammer (2) mittels der Pumpelemente herausgepumpt, und zwar so stark, daß sich trotz ständig geöffneter Zulaufbohrung (7) in der Trennwand keine Kupplungsflüssigkeit in der Arbeitskammer (2) ansammelt. Wird dann die Bremse z.B. infolge gestiegener Motortemperatur gelöst, so läuft durch die offene Ventilöffnung (7) Kupplungsflüssigkeit vom Vorratsraum (5) in die Arbeitskammer (2), d.h. die Kupplung schaltet zu und läuft hoch, da ständig mehr Kupplungsflüssigkeit zuläuft als abgepumpt wird. Eine Bimetallsteuerung wie beim Stand der Technik wird überflüssig.

Die Herstellung des neuen Spulengehäuses (20) durch Tiefziehen ist äußerst einfach. Wegen der geringen Wandstärke wird das Gewicht der Kupplung nur unwesentlich erhöht. Dies gilt auch für die Ausbildung der Bremsscheibe und deren federnde Befestigung. Es ist auch möglich, innerhalb des ringförmigen Spulengehäuses (20) Platz frei zu lassen, so daß zum Beispiel, wie aus Fig. 1 erkennbar ist, Befestigungsschrauben (27) mit ihren Köpfen in den freibleibenden Raum innerhalb des Spulengehäuses (20) hereinragen können. Es ist dadurch eine gedrängte, raumsparende Bauweise möglich.

## Patentansprüche

1. Flüssigkeitsreibungskupplung, insbesondere für den Antrieb des Lüfters eines Kühlers für eine Verbrennungskraftmaschine, bestehend aus einer Vorratskammer (5) und einer Arbeitskammer (2) sowie einem angetriebenen (3) und einem von diesem in Abhängigkeit von der Füllung der Arbeitskammer (2) mitgenommenen und mit einer Bremseinrichtung versehenen Kupplungsteil (1), dadurch gekennzeichnet, daß die Bremseinrichtung als eine von einem Elektromagneten (25) jederzeit beliebig betätigbare Bremse (15) ausgebildet ist, die am mitgenommenen Kupplungsteil (1) so angreift, daß Zu- und Ablauf von Kupplungsflüssigkeit zwischen der Vorratskammer (5) und der Arbeitskammer (2) durch die Drehzhaldifferenz zwischen dem angetriebenen (3) und dem mitgenommenen, abbremsbaren Kupplungsteil (1) steuerbar sind.

2. Flüssigkeitsreibungskupplung nach Anspruch 1, dadurch gekennzeichnet, daß der Elektromagnet (25) in einer ortsfest angeordneten Halterung (20) befestigt ist.

3. Flüssigkeitsreibungskupplung nach den Ansprüchen 1 und 2, dadurch gekennzeichnet, daß die ortsfeste Halterung als ein tiefgezogenes Spulengehäuse (20) aus Blech ausgebildet ist.

4. Flüssigkeitsreibungskupplung nach Anspruch 3, dadurch gekennzeichnet, daß das Spulengehäuse (20) als ein Tragring ausgebildet ist.

5. Flüssigkeitsreibungskupplung nach den Ansprüchen 3 oder 4, dadurch gekennzeichnet, daß an dem Spulengehäuse (20) Festhaltearme (22) zur ortsfesten Anordnung einstückig angebracht sind.

6. Flüssigkeitsreibungskupplung nach einem der Ansprüche 1 bis 5, dadurch gekennzeichnet, daß die geschlossene Rückseite (23) des Spulengehäuses (20) eine ebene Reibfläche bildet und an einer axial beweglichen, am mitgenommenen Kupplungsteil (1) angebrachten Bremsscheibe (15) anlegbar ist.

7. Flüssigkeitsreibungskupplung nach Anspruch 6, dadurch gekennzeichnet, daß die Bremsscheibe (15) mit über ihren Umfang nach außen vorstehenden, federnden Armen (16) mit dem Kupplungsgehäuse (1) verbunden ist.

8. Flüssigkeitsreibungskupplung nach Anspruch 7, dadurch gekennzeichnet, daß die federnden Arme (16) tangential zu einem Durchmesser verlaufen, der etwa in der Mitte der Bremsscheibe (15) liegt, daß die federnden Arme (16) mit einem Ende (18) an der Bremsscheibe (15) angebracht sind.

## Claims

1. A fluid friction clutch, particularly for driving the fan of a radiator for an internal combustion engine, consisting of a storage chamber (5) and a working chamber (2) and a driven clutch part (3) and, provided with braking means and entrained by the clutch part (3) as a function of the filling in the working chamber (2), a clutch part (1), characterised in that the braking device is constructed as a brake (15) adapted to be actuated at any desired moment by an electromagnet (25) and which engages the entrained clutch part (1) in such a way that the supply and discharge of clutch fluid between the storage chamber (5) and the working chamber (2) can be controlled by the difference in rotary speeds between the driven clutch part (3) and the entrained and brakable clutch part (1).

2. A fluid friction clutch according to Claim 1, characterised in that the electromagnet (25) is fixed in a rigidly disposed support (20).

3. A fluid friction clutch according to Claims 1 and 2, characterised in that the rigid support is constructed from sheet metal as a deep-drawn coil housing (20).

4. A fluid friction clutch according to Claim 3, characterised in that the coil housing (2) is constructed as a supporting ring.

5. A fluid friction clutch according to Claims 3 or 4, characterised in that retaining arms (22) for rigid disposition are integrally mounted on the coil housing (20).

6. A fluid friction clutch according to one of Claims 1 to 5, characterised in that the closed rear face (23) of the coil housing (20) forms one plane friction surface and can be applied to an axially movable brake disc (15) which is mounted on the entrained clutch part (1).

7. A fluid friction clutch according to Claim 6, characterised in that the brake disc (15) is connected to the clutch housing (1) via resilient arms (16) projecting outwardly beyond its periphery.

8. A fluid friction clutch according to Claim 7, characterised in that the resilient arms (16) extend tangentially to a diameter which is substantially in the centre of the brake disc (15) and in that the resilient arms (16) have one end (18) mounted on the brake disc (15).

## Revendications

1. Accouplement à friction de liquide, essentiellement pour l'entraînement du ventilateur d'un radiateur pour une machine à combustion, comprenant un réservoir (5) et une chambre de travail (2), ainsi qu'une pièce d'accouplement commandée (3) et une pièce d'accouplement (1) entraînée par cette dernière en fonction du remplissage de la chambre de travail (2) et pourvue d'un dispositif de freinage, caractérisé en ce que le dispositif de freinage est réalisé comme frein (15) pouvant être actionné à volonté et à n'importe quel moment par un électro-aimant (25) agissant sur la pièce d'accouplement entraînée (1) de manière que l'entrée et la sortie de liquide d'accouplement entre le réservoir (5) et la chambre de travail (2) peuvent être commandées par la différence de vitesse entre la pièce d'accouplement commandée (3) et la pièce d'accouplement entraînée (1) freinable.

2. Accouplement à friction de liquide selon la revendication 1, caractérisé en ce que l'électro-aimant (25) est fixé dans un support (20) disposé de façon stationnaire.

3. Accouplement à friction de liquide selon les revendications 1 et 2, caractérisé en ce que le support stationnaire est réalisé comme cage de bobine (20) en tôle emboutie.

4. Accouplement à friction de liquide selon la revendication 3, caractérisé en ce que la cage de bobine (20) est réalisée comme anneau porteur.

5. Accouplement à friction de liquide selon la revendication 3 ou 4, caractérisé en ce que des bras-support (22) sont fixés d'une pièce sur la cage de bobine (20) pour la disposition stationnaire.

6. Accouplement à friction de liquide selon l'une des revendications 1 à 6, caractérisé en ce que la face arrière fermée (23) de la cage de bobine (20) forme une surface de friction plane et peut être appliquée sur un disque de frein (15), amovible axialement, fixé sur la pièce d'accouplement entraînée (1).

7. Accouplement à friction de liquide selon la revendication 6, caractérisé en ce que le disque à frein (15) est relié avec le carter d'accouplement (1) par des bras élastiques (16) faisant saillie vers l'extérieur de la périphérie du disque.

8. Accouplement à friction de liquide selon la revendication 7, caractérisé en ce que les bras élastiques (16) sont tangentiels à un diamètre passant environ au milieu du disque de frein (15), que les bras élastiques (16) sont fixés avec une extrémité (18) sur le disque de frein (15).
